# EUROPEAN PATENT APPLICATION

(11) **EP 4 394 554 A1**
(43) Date of publication of application: **03.07.2024**
(21) Application number: 22866303.5
(22) Date of filing: 05.08.2022
(51) Int. Cl.: G06F 3/01, G06T 19/00, G06T 7/73, G06F 18/40

(54) **METHOD FOR DETERMINING AND PRESENTING TARGET MARK INFORMATION AND APPARATUS**

(30) Priority: 09.09.2021 CN 202111056350
(71) Applicant: Hiscene Information Technology Co., Ltd., Shanghai 201203 (CN)
(72) Inventor: TANG, Rongxing, Shanghai 201203 (CN); JIANG, Jianping, Shanghai 201203 (CN); HOU, Xiaohui, Shanghai 201203 (CN); LIU, Lixiang, Shanghai 201203 (CN)
(74) Representative: Wang, Bo
(86) International application number: PCT/CN2022/110472
(87) International publication number: WO 2023/035829

(57) **Abstract**

The invention aims to provide a method and apparatus for determining and presenting target tag information, comprising: shooting an initial scene image of a current scene by a camera device, and performing three-dimensional tracking initialization on the current scene according to the initial scene image; shooting a real-time scene image of the current scene by the camera device, acquiring real-time pose information of the camera device and 3D point cloud information corresponding to the current scene through three-dimensional tracking, and acquiring tag information input by a user in the real-time scene image of the current scene and a target image position corresponding to the tag information; and determining a target spatial position according to the real-time pose information and the target image position, and generating corresponding target tag information according to the target spatial position and the tag information. The application facilitates a user to edit corresponding scenes to provide relevant interaction information, which is conducive to the scene collaboration of multiple users, and improves the user experience.

## Description

This application is based upon and claims the priority from 202111056350 6, filed September 9, 2021, the disclosure of which is incorporated herein in its entirety by reference.

### Field

The present application relates to the field of communications, in particular to a technique for determining and presenting target markup information.

### Background

Augmented Reality (AR) is a technology that integrates virtual information with the real world skillfully. It widely uses multimedia, three-dimensional modeling, real-time tracking and registration, intelligent interaction, sensing and other technical means to simulate computer-generated text, images, three-dimensional models, music, video and other virtual information. By applying these simulated virtual information to the real world, the two kinds of information complement each other, thus realizing the "enhancement" of the real world. AR technology is a relatively new technical content that promotes the integration of real world information and virtual world information. On the basis of science and technology such as computer, it simulates the entity information which is difficult to experience in the space range of the real world, and superimposes the virtual information content in the real world for effective application. And in this process, it can be perceived by human senses, so as to achieve sensory experience beyond reality. In the process of augmented reality, it is usually necessary to tag a specific location or a specific target to make it easier for users to access interactive content.

### Disclosure of invention

An object of the present application is to provide a method and apparatus for determining and presenting target tag information.

According to an aspect of the present application, there is provided a method for determining target tag information, applied to the first user equipment, the method comprising:
shooting an initial scene image of a current scene by a camera device, and performing three-dimensional tracking initialization on the current scene according to the initial scene image;
shooting a real-time scene image of the current scene by the camera device, acquiring real-time pose information of the camera device and 3D point cloud information corresponding to the current scene through three-dimensional tracking, and acquiring tag information input by a user in the real-time scene image of the current scene and a target image position corresponding to the tag information;
determining a target spatial position according to the real-time pose information and the target image position, and generating corresponding target tag information according to the target spatial position and the tag information, wherein the target tag information is used for overlaying and presenting the tag information at the target spatial position of the 3D point cloud information.

According to another aspect of the present application, there is provided a method for presenting target tag information, applied to the second user equipment, the method comprising:
obtaining target scene information that matches a current scene, wherein the target scene information comprises a corresponding target tag information, which comprises corresponding tag information and a target spatial position;
shooting a current scene image about the current scene by a camera device;
determining a corresponding target image position according to the current pose information of the camera device and the target spatial position, and overlaying and presenting the tag information at the target image position of the current scene image.

According to an aspect of the present application, there is provided a method for determining and presenting target tag information, the method comprising:
the first user equipment shoots an initial scene image of a current scene by a camera device, and performs three-dimensional tracking initialization on the current scene according to the initial scene image;
the first user equipment shoots a real-time scene image of the current scene by the camera device, acquires real-time pose information of the camera device and 3D point cloud information corresponding to the current scene through three-dimensional tracking, and acquires tag information input by a user in the real-time scene image of the current scene and a target image position corresponding to the tag information;
the first user equipment determines a target spatial position according to the real-time pose information and the target image position, and generates corresponding target tag information according to the target spatial position and the tag information, wherein the target tag information is used for overlaying and presenting the tag information at the target spatial position of the 3D point cloud information;
the second user equipment obtains target scene information that matches the current scene, wherein the target scene information comprises a corresponding target tag information, which comprises corresponding tag information and a target spatial position;
the second user equipment shoots a current scene image about the current scene by a camera device;
the second user equipment determines a corresponding target image position according to the current pose information of the camera device and the target spatial position, and overlays and presents the tag information at the target image position of the current scene image.

According to an aspect of the present application, there is provided the first user equipment for determining target tag information, wherein the first user equipment comprises:
one one module, for shooting an initial scene image of a current scene by a camera device, and performing three-dimensional tracking initialization on the current scene according to the initial scene image;
one two module, for shooting a real-time scene image of the current scene by the camera device, acquiring real-time pose information of the camera device and 3D point cloud information corresponding to the current scene through 3D tracking, and acquire tag information input by a user in the real-time scene image of the current scene and a target image position corresponding to the tag information;
one three module, for determining a target spatial position according to the real-time pose information and the target image position, and generating corresponding target tag information according to the target spatial position and the tag information, wherein the target tag information is used for overlaying and presenting the tag information at the target spatial position of the 3D point cloud information.

According to another aspect of the present application, there is provided the second user equipment for presenting target tag information, wherein the second user equipment comprises:
two one module, for obtaining target scene information that matches a current scene, wherein the target scene information comprises a corresponding target tag information, which comprises corresponding tag information and a target spatial position;
two two module, for shooting a current scene image about the current scene by a camera device;
two three module, for determining a corresponding target image position according to the current pose information of the camera device and the target spatial position, and overlaying and presenting the tag information at the target image position of the current scene image.

According to an aspect of the present application, there is provided a computer equipment, comprising:
one or more processors; and
a storage apparatus for storing computer executable instructions, which carry out the steps of a method as described in any of the above when the executable instruction is being executed.

According to an aspect of the present application, there is provided a computer-readable storage medium, storing one or more compute programs/instructions which implement the steps of a method as described in any of the above when executed.

According to an aspect of the present application, there is provided a computer program product, comprising computer programs/instructions which implement the steps of a method according to any of the above when executed by a processor.

Compared with the prior art, the application has the advantages that the 3D point cloud information corresponding to the current scene and the real-time pose of the camera device are acquired by three-dimensional tracking of the current scene, the method and the device are used for determining the spatial position corresponding to the tag information input by the user in the real-time scene image of the current scene. It is convenient for users to edit the target objects in the scene to provide relevant interactive information. It is also conducive to the scene collaboration of multiple users, and improves the user experience.

### Brief description of drawings

Other features, objects, and advantages of the present application will become more apparent upon reading the detailed description of the non-limiting embodiments with reference to the following drawings:
FIG. 1 illustrates a flow chart of a method for determining target tag information according to an embodiment of the present application;
FIG. 2 illustrates a flow chart of a method for presenting target tag information according to another embodiment of the present application;
FIG. 3 illustrates a flow chart of a system method for determining and presenting target tag information according to an embodiment of the present application;
FIG. 4 illustrates functional modules of the first user equipment according to an embodiment of the present application;
FIG. 5 illustrates functional modules of the second user equipment according to an embodiment of the present application;
Fig. 6 illustrates an exemplary system that may be used to implement various embodiments described herein.

The same or similar reference numbers in the drawings represent the same or similar parts.

### Detailed description of embodiment

The present application is described in further detail below with reference to the accompanying drawings.

In a typical configuration of the present application, the terminal, the device of the service network, and the trusted party each include one or more processors (e.g., a Central Processing Unit (CPU), an input/output interface, a network interface, and a memory.

Memory may include volatile memory in a computer-readable medium, Random Access Memory (RAM), and/or non-volatile memory such as Read Only Memory (ROM) or Flash Memory. Memory is an example of a computer-readable medium.

Computer-readable media, including both permanent and non-permanent, removable and non-removable media, may be implemented in any method or technology for information storage. The information may be computer readable instructions, data structures, modules of programs, or other data. Examples of computer storage media include, but are not limited to, Phase-Change Memory (PCM), Programmable Random Access Memory (PRAM), PRAM), Static Random Access Memory (SRAM), Dynamic Random Access Memory ( DRAM), other types of Random Access Memory (RAM), Read-Only Memory (ROM), Electrically Erasable Programmable Read-Only Memory (EEPROM), flash memory or other memory technologies, Compact Disc Read-Only Memory (CD-ROM), Digital Versatile Disks (DVD) or other optical storage, magnetic cassettes, Magnetic tape storage or other magnetic storage devices or any other non-transmission medium that can be used to store information that can be accessed by a computing device.

The equipment referred to herein includes, but is not limited to, a user equipment, a network equipment, or a equipment formed by integrating the user equipment and the network equipment through a network. The user equipment includes, but is not limited to, any mobile electronic product that can perform human-computer interaction with a user (for example, human-computer interaction through a touch pad), such as a smart phone, a tablet computer, smart glasses, etc. The mobile electronic product may adopt any operating system, such as an Android operating system, an iOS operating system, etc. Wherein the network equipment comprises an electronic equipment capable of automatically performing numerical value calculation and information processing according to a preset or stored instruction, and the hardware thereof comprises but is not limited to a microprocessor, an Application Specific Integrated Circuit (ASIC) (ASIC), a Programmable Logic Device (PLD), a Field Programmable Gate Array (FPGA), a Digital Signal Processor (DSP), an embedded device, etc. The network equipment includes, but is not limited to, a computer, a network host, a single network server, a set of multiple network servers, or a cloud of multiple servers. Here, the cloud is composed of a large number of computers or network servers based on Cloud Computing, wherein the cloud computing is a kind of distributed computing, and is a virtual supercomputer composed of a group of loosely coupled computer sets. The network includes, but is not limited to, the Internet, a wide area network, a metropolitan area network, a local area network, a VPN network, a wireless ad hoc network, and the like. Preferably, the equipment may also be a program running on the user equipment, the network equipment, or an equipment formed by integrating the user equipment and the network equipment, the touch terminal, or the network equipment and the touch terminal through the network.

Of course, those skilled in the art should understand that the above devices are only examples, and other existing or future devices that may be applicable to the present application should also be included in the scope of protection of the present application, and are hereby incorporated by reference.

In the description of this application, "a plurality" means two or more unless specifically defined otherwise.

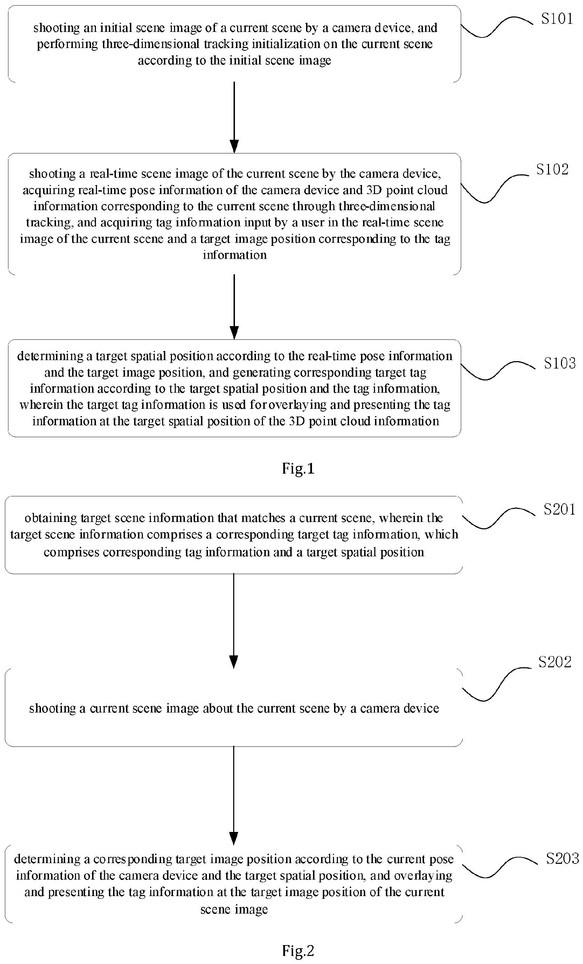

FIG. 1 illustrates a method for determining target tag information according to an aspect of the present application, which is applied to the first user equipment, wherein the method comprises step S101, step S102, and step S103. In step S101, shooting an initial scene image of a current scene by a camera device, and performing three-dimensional tracking initialization on the current scene according to the initial scene image. In step S102, shooting a real-time scene image of the current scene by the camera device, acquiring real-time pose information of the camera device and 3D point cloud information corresponding to the current scene through three-dimensional tracking, and acquiring tag information input by a user in the real-time scene image of the current scene and a target image position corresponding to the tag information. In step S103, determining a target spatial position according to the real-time pose information and the target image position, and generating corresponding target tag information according to the target spatial position and the tag information, wherein the target tag information is used for overlaying and presenting the tag information at the target spatial position of the 3D point cloud information. Here, the first user equipment includes but is not limited to a human-computer interaction device with a camera device, such as a personal computer, a smart phone, a tablet computer, a projector, smart glasses or a smart helmet, wherein the first user equipment may include the camera device itself, or may have an external camera device. In some cases, the first user equipment further comprises a display device (such as a display screen, a projector, etc.), for overlaying and displaying the corresponding tag information and the like in the presented real-time scene image.

Specifically, in step S101, shooting an initial scene image of a current scene by a camera device, and performing three-dimensional tracking initialization on the current scene according to the initial scene image. For example, a user holds the first user equipment, and a camera of the first user equipment shoots an initial scene image of a current scene, the number of the initial scene images may be one or more. The first user equipment may perform three-dimensional tracking initialization on the current scene based on the one or more initial scene images, for example, SLAM (Simultaneous Localization And Mapping) initialization. The specific initialization method includes, but is not limited to, double-frame initialization, single-frame initialization, 2D recognition initialization, 3D model initialization, and the like. The first user equipment may complete the 3D tracking initialization locally, or may upload the acquired initial scene image to other equipment (such as a network server) to perform the 3D tracking initialization, which is not limited herein. Initial pose information of the camera device can be obtained by performing three-dimensional tracking initialization, and in some cases, in addition to obtaining the initial pose, initial map point information corresponding to the current scene can also be obtained. In some embodiments, after the SLAM initialization is completed, the first user equipment may present a prompt message indicating that the initialization is completed to the user, so as to remind the user to add tag information (such as AR tag information). The initialization method comprises but is not limited to: completing initialization by recognizing a preset 2D tag in the current scene; single-frame initialization; double-frame initialization; 3D model initialization, and the like. Specific examples are as follows:

### 1) SLAM initialization by 2D identification;

A 2D identification map is placed at the corresponding position of the current scene, and 2D features are extracted from the 2D identification map and saved as a file to form a 2D feature library. After the first user equipment acquires an image with a 2D identification map through a camera, the first user equipment extracts image features and performs matching identification with a stored feature library to determine the pose of the camera relative to the current scene, and sends the information (the pose of the camera) obtained by the identification algorithm to the SLAM algorithm to complete the initialization of tracking.

### 2) Single-frame initialization

Under the condition that the image sensor (i.e., the camera device) obtains an approximate plane scene, the single-frame initialization uses the homography matrix to obtain the corresponding rotation and translation matrix, so as to initialize the map points and the attitude of the camera device.

### 3) Double-frame initialization

Two continuous frames with the number of feature points larger than a certain threshold are selected for matching, and the number of the matching points larger than a certain threshold is considered to be successful matching. And then a homography matrix and a fundamental matrix between the two frames are calculated. According to the situation, the homography matrix or the fundamental matrix is selected to restore the pose RT (the relative pose of two image frames), the first frame (the first shot frame) which is initialized successfully is used as the world coordinate system, the relative pose from the first frame to the second frame is obtained, and then the depth is obtained through triangulation, and the map point is calculated. BA (Bundle Adjustment) optimization is then performed to optimize the map points by updating the relationship between the keyframes. Finally, the depth of the map point is normalized, and the initialization key frame and the current key frame are added to the map to complete the initialization.

### 4) 3D model initialization

Firstly, the 3D model of the tracking target is obtained, and the 3D edge features are obtained by using the 3D model, and then the initial pose of the tracking target is obtained. The 3D edge features under the initial pose on the application interface are rendered, the video containing the tracking target is shot, and the image frames of the video are read. The user aligns the target in the scene through the edge features of the 3D model for tracking and matching. The current pose and feature point information are obtained after tracking to the target, and the current pose and feature point information are transmitted to the SLAM algorithm for initialization.

Of course, those skilled in the art should be able to understand that the above three-dimensional tracking initialization method is only an example. Other existing or future three-dimensional tracking initialization methods that are applicable to the present application should also be included in the scope of protection of the present application, and are hereby incorporated by reference.

In step S 102, shooting a real-time scene image of the current scene by the camera device, acquiring real-time pose information of the camera device and 3D point cloud information corresponding to the current scene through three-dimensional tracking, and acquiring tag information input by a user in the real-time scene image of the current scene and a target image position corresponding to the tag information. For example, after performing three-dimensional tracking initialization, the first user equipment continues to scan the current scene through the camera device to obtain a corresponding real-time scene image. The real-time scene image is processed by the tracking thread, the local mapping thread, etc of the three-dimensional tracking algorithm, and the real-time pose information of the camera device and the 3D point cloud information corresponding to the current scene are obtained. The 3D point cloud information may be updated according to subsequent real-time scene image information. The 3D point cloud information includes 3D points, for example, the 3D point cloud information includes 3D map points determined by image matching and depth information acquisition, and for example, the 3D point cloud information includes a data pattern acquired by a 3D scanner, the scanned data is recorded in a point pattern, each point includes three-dimensional coordinates, and some of the points may include color information (R, G, B) or the intensity of the reflective surface of the object. In some embodiments, in addition to the 3D map points, the 3D point cloud information further includes, but is not limited to, key frames corresponding to the point cloud information, common view information corresponding to the point cloud information, growing tree information corresponding to the point cloud information, and the like. The real-time pose information includes the real-time position and pose of the camera device in the space, and the conversion between the image position and the spatial position can be performed through the real-time pose information. For example, the pose information includes the external parameters of the camera device relative to the world coordinate system of the current scene. For another example, the pose information includes the external parameters of the world coordinate system of the camera device relative to the current scene and the internal parameters of the camera coordinate system and the image/pixel coordinate system of the camera device, which are not limited herein. The first user equipment may obtain the relevant operation of the user in the real-time scene image, such as the selected operation of the determined target point position such as touch, click, voice, gesture, or head action. The first user equipment may determine the target image position of the target point position based on the selection operation of the user in the real-time scene image. The target image position is used to characterize the two-dimensional coordinate information of the target point position in the pixel/image coordinate system corresponding to the real-time scene image. The first user equipment may further obtain tag information input by the user. The tag information includes human-computer interaction content input by the user, and is used for superimposing the human-computer interaction content on the spatial position of the target image position corresponding to the current scene. For example, the user selects a tag information on the first user equipment, such as a 3D arrow, and then clicks a certain position in the real-time scene image displayed in the display screen, the clicked position is the target image position, and then the 3D arrow is superimposed and displayed in the real-time scene.

In some embodiments, the tag information includes, but is not limited to: identification information, file information, form information, application invoking information, real-time sensing information. For example, the tag information may include identification information such as an arrow, a paintbrush, a circle, a geometric shape, and the like. For example, the tag information may further include corresponding multimedia file information, such as pictures, videos, 3D models, PDF files, office documents, and the like. For another example, the tag information may further include form information, for example, a form is generated at a position corresponding to the target image for the user to view or input content. For example, the tag information may further include application invoking information for executing instructions related to the application, such as opening the application, and invoking specific functions of the application, such as making a phone call, opening a link, and the like. For example, the tag information may further include real-time sensing information, which is used to connect a sensing device (such as a sensor) and acquire the sensing data of the target object. In some embodiments, the tag information includes any of the following: tag identification, such as tag icon, name, etc.; tag content, such as PDF file content, tag color, size, etc.; tag type, such as file information, application invoking information, etc. Of course, those skilled in the art should understand that the above tag information is only an example, and other existing or future tag information that may be applicable to the present application should also be included in the scope of protection of the present application and incorporated herein by reference.

In some embodiments, the application invoking information is used to invoke the first target application installed in the current device. For example, the first user equipment has currently installed a plurality of applications, and the application invoking information is used to invoke one of the applications currently installed on the first user equipment, such as launching a corresponding application and executing a related shortcut instruction, for example, launching a phone application, and initiating a call to Zhang XX. Of course, if the tag information is currently presented on the first user equipment, the application invoking information is used to invoke the application in the first user equipment. If the tag information is presented on other user equipment (for example, the second user equipment), the application invoking information is used to invoke the application in the corresponding second user equipment, for example, to launch the telephone application of the second user equipment and initiate a call to Zhang XX. In some cases. If the application corresponding to the application invoking information is not installed in the corresponding second user equipment, the application invoking information is used to prompt the user to install the corresponding application and invoke the application after the installation is completed.

In some embodiments, the application invoking information is used to invoke the second target application installed in the corresponding third user equipment, and there is a communication connection between the third user equipment and the first user equipment. For example, the third user equipment is in the current scene. The third user equipment is in communication connection with the first user equipment through a wired, wireless, or network device. Based on the corresponding communication connection, the first user equipment may send an instruction corresponding to the application invoking information to the third user equipment, so that the third user equipment invokes the related application to perform the corresponding operation. Specifically, if the first user equipment is augmented reality glasses, the third user equipment is an operation device on a workbench in the current scene, and an operation application for operating a workpiece is installed on the third user equipment, the first user equipment may add tag information in the real-time scene image based on the operation of the user. The tag information is the application invoking information corresponding to the operation application of the third user equipment, and if the trigger operation of the relevant user about the application invoking information is subsequently obtained, the third user equipment invokes the corresponding operation application to process the workpiece. In some embodiments, when a user equipment (such as the first user equipment or the second user equipment) acquires a trigger operation of a user on the tag information presented in the scene image, the user equipment sends an instruction corresponding to the application invoking information to a third user equipment, so that the third user equipment invokes a related application to perform a related operation or instruction. The trigger operation includes but is not limited to click, touch, gesture instruction, voice instruction, key press, head movement instruction, etc.

In step S103, determining a target spatial position according to the real-time pose information and the target image position, and generating corresponding target tag information according to the target spatial position and the tag information, wherein the target tag information is used for overlaying and presenting the tag information at the target spatial position of the 3D point cloud information. In some embodiments, according to the real-time pose information obtained by the camera device, the spatial three-dimensional coordinates corresponding to the two-dimensional coordinates on the real-time scene image captured by the camera device may be estimated, thereby determining the corresponding target spatial position based on the target image position. For example, after the SLAM is initialized, the 3D point cloud in the environment and the pose of the camera device are calculated in real time according to the real-time scene image, and when the user clicks the real-time scene image to add tag information, the algorithm uses the 3D point cloud in the current scene to fit a plane under the world coordinate system to obtain a plane expression. At the same time, a ray based on a camera coordinate system is constructed through an optical center of a camera device and a coordinate of a user click point on an image plane. Then the ray is converted to a world coordinate system, and an intersection point of the ray and the plane is calculated through a ray expression and a plane expression under the world coordinate system. The intersection point is a 3D space point corresponding to a 2D click point in a scene image shot by the camera device. The coordinate position corresponding to the 3D space point is determined as a target spatial position corresponding to the tag information. The target spatial position is used for placing the corresponding tag information in the space, so that the tag information is displayed in an overlapping manner at the corresponding position in the real-time scene image shot by the camera device, and the tag information is rendered on the real-time scene image. The first user equipment generates corresponding target tag information according to the corresponding target spatial position and tag information, for example, generates a corresponding tag configuration file. The configuration file includes spatial coordinate information and tag information, etc. In some embodiments, the corresponding tag configuration file and the corresponding scene 3D point cloud information may be stored in the same file, thereby facilitating management and storage, etc. Of course, those skilled in the art should be able to understand that the above method for determining the corresponding target spatial position according to the real-time pose information and the target image position is only an example, and other existing or future determination methods that are applicable to the present application should also be included in the scope of protection of the present application, and are hereby incorporated by reference. In some embodiments, the tag information includes real-time sensing information for indicating real-time sensing data of a corresponding sensing device, and there is a communication connection between the sensing device and the first user equipment. For example, real-time sensing data includes real-time collection of sound, light, heat, electricity, mechanics, chemistry, biology, location and other required information of any object or process that needs to be monitored, connected and interacted through various devices and technologies such as information sensors, radio frequency identification technology, global positioning system, infrared sensors, laser scanners, etc. Common sensing devices include a temperature sensor, a humidity sensor, a brightness sensor, etc. The above sensing devices are only examples and are not limited thereto. A communication connection is established between the corresponding sensing device and the first user equipment through a wired, wireless or network device, so that the first user equipment can obtain real-time sensing information of the sensing device based on the communication connection. The sensing device is arranged on the target object and is used for collecting real-time sensing data of the target object (such as other devices or objects). The real-time sensing information may be updated based on a currently acquired real-time image, or the real-time sensing information may be updated based on a predetermined time interval. For example, in the real-time scene image, the first user equipment may present one or more selectable objects contained in the scene image, wherein each selectable object is provided with a corresponding sensing device. The user selects the tag information of a real-time sensing information on the first user equipment, such as a temperature sensor. Then the user clicks a certain selectable object of a temperature sensor displayed in the display screen. The real-time temperature sensing tag information is displayed at the position of the selectable object in the real-time scene, and the data of the temperature sensor is subsequently updated every 0.5 seconds. For another example, the user determines the sensing device for a certain selectable object setting. Then the user selects the tag information of the real-time sensing information corresponding to the sensing device on the first user equipment, and clicks the selectable object displayed in the display screen, and the selected real-time sensing tag information is superimposed and displayed at the position of the selectable object in the real-time scene. The subsequent data of the sensor is updated according to each real-time scene image.

In some embodiments, the method further comprises step S104 (not shown), in the Step S104, receiving the real-time sensing information which is returned by the network device and obtained by the sensing device is received. The generating corresponding target tag information according to the target spatial position and the tag information, comprises: generating the corresponding target tag information according to the target spatial position and the real-time sensing information, wherein the target tag information is used for overlapping and presenting the real-time sensing information at the target spatial position of the 3D point cloud information. For example, the first user equipment determines to add the corresponding real-time sensing information to the real-time scene image based on the operation of the user, and determines the target spatial position corresponding to the real-time sensing information. The first user equipment establishes a communication connection with the sensing device through the network equipment. The network equipment may obtain the real-time sensing data of the sensing device in real time, and transmit the real-time sensing data to the first user equipment. The first user equipment receives the corresponding real-time sensing data, and overlays and presents the real-time sensing data at the corresponding spatial position of the real-time scene image (for example, the corresponding real-time image position is calculated in real time according to the target spatial position, the real-time pose information, and the like).

In some embodiments, the determining a target spatial position according to the real-time pose information and the target image position, comprises: mapping the target image position to a space according to the real-time pose information to determine a corresponding 3D straight line; determining a target spatial position corresponding to the target point position according to the 3D point cloud information and the 3D straight line. For example, the first user equipment first determines the corresponding 3D straight line according to the real-time pose information and the target image position of the target point in the real-time scene image, and then determines the target spatial position of the corresponding target point position according to the spatial position relationship between the 3D point cloud information and the 3D straight line, such as, according to the intersection point of the 3D straight line and a plane, the distance between the 3D straight line and the feature point in the 3D point cloud information, etc. The 3D straight line may be a straight line in the camera coordinate system of the camera device, or a straight line in the world coordinate system. For example, the target image position, that is, the 2D tag point (target point position) P2d, is mapped to a straight line L3dC in the camera coordinate system of the camera device, and the 3D point cloud obtained by the SLAM algorithm is mapped to the camera coordinate system to obtain a 3D point in the camera coordinate system. In some embodiments, a point P3d'C with the closest vertical distance to the straight line L3dC in the 3D point cloud under the camera coordinate system is found, and the depth value of the point P3d'C is used to take a point P3dC corresponding to the depth value on the straight line L3dC. In other embodiments, the weighted average of the distance between the 3D point cloud in the camera coordinate system and the straight line L3dC is taken as the depth value. The point P3dC corresponding to the depth value is taken on the straight line L3dC according to the depth value. P3d is obtained by mapping the point P3dC to the world coordinate system, and then P3d is the estimation of the 2D point in the 3D space, thereby determining the target spatial position corresponding to the target image position. For another example, the 3D point cloud obtained by the SLAM algorithm in the world coordinate system is mapped to the pixel coordinate system to obtain a plurality of 2D points, and the mapping relationship between the 2D points and the 3D point cloud is recorded. A plurality of 2D points, denoted as 2Ds, are obtained within a certain distance threshold range from the 2D tag point P2d. In some embodiments, a point with the minimum distance from the tag point P2d is found from the 2Ds points. The depth value of the 3D point under the camera coordinate system corresponding to the 2Ds point is taken as the intercepted depth value. And a point corresponding to the depth value is taken on a straight line L3dC under the camera coordinate system mapped from the tag point P2d to obtain an estimation point P3dC under the camera coordinate system. And then the point is converted to a world coordinate system to obtain a target spatial position; In some embodiments, a point with the minimum distance from the tag point P2d is found from the 2Ds points. The depth value of the 3D point under the world coordinate system corresponding to the 2Ds point is taken as the intercepted depth value. And a point corresponding to the depth value is taken on a straight line L3d under the world coordinate system mapped from the tag point P2d to obtain an estimation point P3d under the world coordinate system, so as to obtain the target spatial position. In some other embodiments, the weight is determined according to the distance between the 2Ds points and the tag point P2d. The final depth value is determined according to the weighted average of the depth values of the 3D points under the camera coordinate system corresponding to the 2Ds points. The weighted average is equal to (the weight of each point * the depth value)/the number of points. According to the final depth value, an estimated point P3dC is intercepted on a straight line L3dC under the camera coordinate system mapped from the tag point P2d, and then the point P3dC is converted to the world coordinate system to obtain the target spatial position. In other embodiments, the weight is determined according to the distance between the 2Ds points and the tag point P2d. The final depth value is determined according to the weighted average of the depth values of the 3D points under the world coordinate system corresponding to the 2Ds points. And the estimated point P3d is intercepted on a straight line L3d under the world coordinate system mapped from the tag point P2d according to the final depth value, so as to obtain the target spatial position. The mapping between the above coordinate systems uses pose information of the camera device.

In some embodiments, the 3D point cloud information comprises a plurality of feature points, each feature point comprises corresponding depth information; the determining a target spatial position corresponding to the target point position according to the 3D point cloud information and the 3D straight line, comprises: determining at least one target feature point from the 3D point cloud information according to the distance between each feature point in the 3D point cloud information and the 3D straight line; determining depth information of a target point position on the 3D straight line based on the depth information of the at least one target feature point, thereby determining a corresponding target spatial position. The plurality of feature points refer to 3D points in the 3D point cloud information. For example, in some cases, the target image position, that is, the 2D tag point (target point position) P2d, is mapped to a straight line L3d under the world coordinate system through the real-time pose information corresponding to the input of tag information in the real-time scene image of the current scene. The distance between each feature point and the straight line L3d is calculated from the 3D point cloud under the world coordinate system obtained by the SLAM algorithm. And at least one corresponding target feature point is filtered out according to the distance between each feature point and the straight line. The first user equipment determines the depth information of the target point according to the depth information of the at least one target feature point. For example, the depth information of a certain target feature point in the at least one target feature point is taken as the depth information of the target point, or the depth information of the target point is determined by a weighted average calculation method. The corresponding target spatial position is determined according to the depth information of the target point. For example, according to the depth information of the target point position, the point corresponding to the depth value is taken on a straight line L3d under the world coordinate system mapped from the tag point P2d to obtain an estimated point P3d under the world coordinate system , so as to obtain the target spatial position. In some embodiments, the at least one target feature point comprises a feature point with the minimum distance from the 3D straight line. Also in some embodiments, the distance of each of the at least one target feature point from the 3D straight line is less than or equal to a distance threshold. The determining depth information of a target point position on the 3D straight line based on the depth information of the at least one target feature point comprises determining the weight information of each target feature point according to the distance information between the at least one target feature point and the 3D straight line; determining the depth information of the target point position on the 3D straight line based on the depth information and the weight information of each target feature point.

For example, the 2D tag point P2d is mapped to a straight line L3d under the world coordinate system according to the real-time pose information corresponding to the tag information input in the real-time scene image of the current scene. In some embodiments, a point P3d ' with the smallest vertical distance from the straight line L3d is found from the 3D point cloud under the world coordinate system obtained by the SLAM algorithm. According to the depth value of the 3D point P3d `, a point corresponding to the depth value on the straight line L3d is taken as an estimation point P3d to obtain an estimation under the world coordinate system. In other embodiments, the weighted average of the distance between the 3D point cloud under the world coordinate system obtained by the SLAM algorithm and the straight line L3d is used as the depth value, and further, the distance between the 3D point cloud participating in the weighted average calculation and the straight line L3d is less than or equal to the distance threshold. A point corresponding to the depth value on the straight line L3d is taken as an estimation point P3d to obtain an estimation under the world coordinate system. The weighted average of the distance between the 3D point and the straight line L3d is equal to (Z value of each 3D point * weight coefficient)/the number of points. The size of the weight is based on the perpendicular distance from the 3D point to the straight line L3d. The smaller the distance is, the smaller the weight is. And the sum of the weights is 1.

In some embodiments, the method further includes step S105 (not shown),and in the Step S105, updating target scene information based on the target tag information, wherein the target scene information is stored in a scene database, the scene database includes one or more target scene information, and each target scene information includes the target tag information and corresponding 3D point cloud information. For example, the scene database may be stored locally in the first user equipment, or may be stored in a network equipment that has a communication connection with the first user equipment. In some cases, the first user equipment generates target scene information about the current scene according to the target tag information, the 3D point cloud information, etc., and updates a local scene database based on the target scene information, or sends the target scene information to a corresponding network equipment to update the scene database, etc. In some cases, the first user equipment may update the target scene information after all the target tag information of the current scene has been determined, or the first user equipment updates the target scene information at a preset time interval, or the first user equipment updates the target scene information based on a manual operation of the user, for example, clicking a save button. The target scene information includes 3D point cloud information corresponding to the scene and at least one piece of target tag information associated with the 3D point cloud information, and the corresponding target tag information includes corresponding tag information and a target spatial position. In some embodiments, the each target scene information further includes corresponding device parameter information. The device parameter information includes internal parameters of the camera device or identification information of the equipment, such as the internal parameters of the camera device of a user equipment that generates the 3D point cloud information or the identification information of the equipment. For example, 3D point cloud information of the scene and a target tag is determined by performing 3D tracking on the scene through the first user equipment. In addition to the 3D point cloud information and the target tag information, the target scene information further includes internal parameters of the camera device of the first user equipment . When other user equipment except the first user equipment uses the target scene, the internal parameters of the camera device of the first user equipment need to be used for point cloud initialization, so that the accuracy of the display position of the target tag on the display device of other user equipment is increased. In some cases, the target scene information may directly include the internal parameters of the equipment's camera device, or the internal parameters of the equipment's camera device may be determined by the identification information (such as ID, name, etc.) of the equipment, for example, the internal parameters of the equipment's camera device have a corresponding relationship with the equipment's identification information. Of course, in some cases, each target scene information further includes corresponding scene identification information, such as a scene preview and description, for example, a picture of the scene is used to identify the scene, and the picture of the scene is presented on the equipment.

After the first user equipment stores the corresponding target scene information, the user can invoke or continue to collect the target scene information subsequently. For example, in some embodiments, the method further comprises step S106 (not shown), in the Step S106, sending the target scene information to a corresponding network device, wherein the target scene information is sent to the second user equipment through the network device base on a scene invoking request of the second user equipment, and the target scene information is used for overlapping the tag information in a current scene image acquired by the second user equipment. For example, the second user holds the second user equipment, and sends a scene invoking request about a current scene to a network device through the second user equipment, where the corresponding scene invoking request includes the scene identification information of the current scene. The network device determines the target scene information of the current scene according to the scene identification information, and sends the target scene information to the second user equipment. Or the network device delivers multiple pieces of target scene information to the second user equipment in advance, and the second user equipment may determine the target scene information selected by the user or automatically matched from the multiple pieces of target scene information based on the selection operation of the user or the current scene image shot by the second user equipment. Then, the tag information added by the corresponding user of the first user equipment in the target scene information is presented through the display device of the second user equipment. And if there is other tag information added by other users in the target scene information, the corresponding other tag information is presented at the same time. In other words, the target scene information may include a plurality of tag information. Each tag information may have a different source user, and the plurality of tag information are presented to the second user equipment according to the latest update result. In some embodiments, in addition to viewing the tag information included in the target scene information, the second user may also edit the tag information presented by the display device of the second user equipment, such as adding, deleting, modifying or replacing the tag information or moving the position of the tag information, which are only examples and are not limited thereto.

In some embodiments, the method further comprises step S107 (not shown). In the step S107, receiving a scene invoking request about the target scene information sent by the corresponding second user equipment; responding to the scene invoking request, and sending the target scene information to the second user equipment, wherein the target scene information is used for overlaying the tag information in a current scene image captured by the second user equipment. For example, the first user equipment and the second user equipment directly establish a communication connection without data storage and transmission through the network device. The second user equipment sends a scene invoking request about the current scene to the first user equipment. The corresponding scene invoking request comprises the scene identification information of the current scene. The first user equipment determines the target scene information of the current scene according to the scene identification information, and sends the target scene information to the second user equipment. Or the first user equipment shares a plurality of target scene information with the second user equipment in advance, the second user equipment may determine the target scene information selected by the user or automatically matched from the plurality of target scene information based on the selection operation of the user or the current scene image shot by the second user equipment. And the tag information in the target scene information is presented through a display device of the second user equipment.

In some embodiments, the method further comprises step S108 (not shown), in the step S108, continuously shooting a subsequent scene image about the current scene through the camera device of the first user equipment, and overlaying and presenting the tag information on the subsequent scene image corresponding to the current scene based on the target scene information. For example, in addition to being invoked by other devices, the corresponding target scene information may also be used for the first user equipment to continue shooting the current scene and perform subsequent updates. For example, the first user equipment continues to add other tag information or edit the existing tag information based on the target tag information after updating the target scene information so as to continue updating the target scene information. Or the first user equipment reloads the target scene information in a subsequent time period, and adds a tag or edits an existing tag based on the target scene information. The first user equipment continues to shoot a subsequent scene image related to the current scene through the camera device, overlays and presents the existing tag information in the subsequent scene image. For example, the corresponding real-time image position in the subsequent scene image is calculated in real time for presentation according to the target spatial position of the existing tag, the real-time pose information of the camera device, and the like.

FIG. 2 illustrates a method for presenting target tag information according to another aspect of the present application, which is applied to the second user equipment, wherein the method comprises step S201, step S202, and step S203. In step S201, obtaining target scene information that matches a current scene, wherein the target scene information comprises a corresponding target tag information, which comprises corresponding tag information and a target spatial position; in step S202, shooting a current scene image about the current scene by a camera device; in step S203, determining a corresponding target image position according to the current pose information of the camera device and the target spatial position, and overlaying and presenting the tag information at the target image position of the current scene image. For example, the second user holds the second user equipment. The second user equipment may send a scene invoking request to the network device or the first user equipment, so as to download one or more target scene information locally through the second user equipment. In some cases, after obtaining the target scene information, the second user equipment scans the current scene through the camera device of the second user equipment to obtain the current scene image, and performs point cloud initialization through three-dimensional tracking (such as SLAM) to align the current world coordinate system with the world coordinate system of the 3D point cloud information in the target scene information. Therefore, the target spatial position of the tag information is aligned with the current scene. The target image position corresponding to the tag information in the current scene image is calculated in real time according to the target spatial position of the tag information in the target scene information, the real-time pose information of the camera device of the second user equipment obtained through three-dimensional tracking and the like. The tag information is superimposed and displayed at a corresponding position in the display screen of the second user equipment. The tag information included in the target scene information is reproduced. The second user equipment acquires the target scene information matched with the current scene. And in some cases, the target scene information can be acquired through manual selection of the second user. And in other cases, the target scene information can be acquired through automatic matching, for example, the second user equipment shoots the current scene image through a camera device, and determines the matched target scene information according to the scene image. For example, the matched target scene information is determined through the 2D recognition initialization of 3D tracking (for example, there is a 2D recognition graph in the scene); or the matched target scene information is determined through the point cloud initialization of 3D tracking. In some cases, the target scene information obtained by the second user equipment and matched with the current scene may also be determined based on relevant information provided by the second user equipment. The relevant information includes but is not limited to position information of the second user equipment(such as GPS location information, wifi radio frequency fingerprint information, etc.), identity information of the user of the second user equipment, permission information of the user of the second user equipment(such as access permission, viewing and editing permission of the user, etc.), information of the task being executed by the user of the second user equipment, etc. In some embodiments, the above method for acquiring the target scene information matching the current scene may be used in combination, for example, the corresponding target scene information is downloaded through the relevant information provided by the second user equipment, or the matched target scene information is selected from the downloaded target scene information, and then the matched target scene is determined through manual selection or automatic matching. It should be understood by those skilled in the art that the above method for the second user equipment to obtain the target scene information matching the current scene is only an example, and other existing or future determination methods that are applicable to the present application should also be included in the scope of protection of the present application, and are hereby incorporated by reference. In some embodiments, the point cloud initialization process for SLAM includes: 1) judging the similarity between the scene image of the current scene and the point cloud in one or more target scene information, selecting the point cloud with the highest similarity (for example, calculating the number of matching points between the feature points of the current image frame and the feature points of multiple key frames in the map point cloud in one or more groups of target scene information by using a BOW (bag of words) model respectively, and selecting the group with the largest number of matching feature points) for loading, and executing SLAM relocation to complete initialization. The relocation process is as follows:

The SLAM system extracts ORB features from the current image frame, and uses the BOW (bag of words) model to calculate the matching points between the feature points of the current image frame and multiple key frames in the map point cloud. The current image frame with the number of matching points that meets a certain threshold is regarded as a candidate key frame. For each candidate key frame, the camera pose of the current frame is estimated by ransac (random sample consensus) and PNP algorithm, and then the estimated interior points (the interior points are the points suitable for the estimation model in the ransac algorithm) are updated to map points, and then the camera pose of the current frame is optimized by graph optimization theory. If the optimized interior points are less, the above process is repeated to make more matches for the map points of the selected multiple candidate key frames. And finally the pose is optimized again. When the interior points meet a certain threshold, the relocation is successful, so as to establish the SLAM coordinate system consistent with the coordinate system in the map point cloud (to obtain the camera pose) and complete the initialization.

Here, the process of generating the target scene information is the same as or similar to the process of generating the target scene information in fig. 1, and will not be described again.

In some embodiments, the method further comprises step S204 (not shown), in the step S204, acquiring an editing operation of the corresponding user on the target scene information, and updating the target scene information based on the editing operation. For example, the editing operation includes, but is not limited to, the editing to the target tag information in the target scene information, such as the modification, addition, replacement, and deletion of the tag information, or the movement of the position of the tag information. Specifically, the second user equipment presents the tag information that has been added in the target scene information on the current scene image through the display device. After the tag information is reproduced, the second user can perform an editing operation in the current scene, and specific examples are as follows:
1) The second user adds the tag information to the current scene image on the display device. The content, the position, the size, the angle and the like of the tag information can be adjusted;
2) The second user can delete the tag information:
   The second user can select the tag information displayed on the display device, such as the tag information that has been added in the target scene information or the tag information newly added by the second user, and a deletion option appears to delete the tag information.
3) The second user views the tag information:
   The second user can view the tag information displayed on the display device, such as clicking the PDF tag to open the PDF for viewing; or viewing the real-time sensing information of the temperature sensor and the like.
4)The second user manipulates the tag information

The second user may perform a corresponding operation on the tag information added in the current scene, such as invoking a shortcut function of an application. After the second user clicks the tag of the application invoking information, the second user equipment can start the application and invoke the corresponding shortcut function. Another example is to fill in a form. The second user can fill in the form after clicking the tag of the form information.

For another example, the editing operation includes updating the 3D point cloud information in the target scene information. For example, by moving the camera device of the second user equipment, the 3D point cloud information corresponding to the target scene information is updated through a 3D tracking algorithm. In some embodiments, the editing operation of the second user on the target scene is synchronized to the cloud server, and the corresponding scene database is updated. For example, the editing operation of the second user on the target scene overwrites the previous target scene information, or the editing operation of the second user on the target scene is saved as a new target scene information.

In some embodiments, the method further comprises step S205 (not shown), in the step S205, sending the updated target scene information to the network device to update the corresponding scene database. In some embodiments, the tag information includes real-time sensing information, and the real-time sensing information is used to indicate real-time sensing data of a corresponding sensing device. There is a communication connection between the sensing device and the second user equipment. The method further comprises step S207 (not shown), in the step S207, acquiring real-time sensing data corresponding to the sensing device; wherein the overlaying and presenting the tag information at the target image position of the current scene image, comprises: overlaying and presenting the real-time sensing data at the target image position of the current scene image. For example, real-time sensing data includes real-time collection of sound, light, heat, electricity, mechanics, chemistry, biology, location and other required information of any object or process that needs to be monitored, connected and interacted through various devices and technologies such as information sensors, radio frequency identification technology, global positioning system, infrared sensors, laser scanners, etc. A communication connection is established between the corresponding sensing device and the second user equipment through a wired, wireless or network device, so that the second user equipment can obtain real-time sensing information of the sensing device based on the communication connection. The sensing device is arranged on the target object and is used for collecting real-time sensing data of the target object (such as other devices or objects). The real-time sensing information may be updated based on a currently acquired real-time image, or the real-time sensing information may be updated based on a predetermined time interval. For example, in the real-time scene image, the second user equipment may present the tag information of one or more real-time sensing information added to a certain target object in the scene image. The second user may view the real-time sensing information of the target object by updating the real-time sensing information, so as to learn about the device status of the target object.

In some embodiments, the tag information comprises application invoking information, and the application invoking information is used for invoking a target application in the current device; The method further comprises step S206 (not shown), in the step S206, acquiring a trigger operation of the correspond user about the application invoking information in the current scene image, and invoking the target application in the second user equipment based on the trigger operation. For example, the second user equipment has currently installed a plurality of applications, and the application invoking information is used to invoke one of the applications currently installed on the second user equipment, such as launching a corresponding application and executing a related shortcut instruction, for example, launching a phone application and initiating a call to Zhang XX. In some cases, if the application corresponding to the application invoking information is not installed in the corresponding second user equipment, the application invoking information is used to prompt the user to install the corresponding application and invoke the application after the installation is completed. The third user equipment is in the current scene. The third user equipment is in communication connection with the second user equipment through a wired, wireless, or network device. Based on the corresponding communication connection, the second user equipment may send an instruction corresponding to the application invoking information to the third user equipment, so that the third user equipment invokes the related application to perform the corresponding operation. Specifically, if the second user equipment is augmented reality glasses, the third user equipment is an operation device on a workbench in the current scene, and an operation application for operating a workpiece is installed on the third user equipment, the second user equipment may view the tag information of the application invoking information added in the current real-time scene. For example, the application invoking information corresponding to the operation application of the third user equipment is currently presented in the real-time scene image. If the trigger operation of the second user about the application invoking information is obtained, the third user equipment invokes the corresponding operation device to process the workpiece. In some cases, the second user may also add tag information about the application invoking information corresponding to the operation application of the third user equipment in the real-time scene information. The trigger operation includes but is not limited to click, touch, gesture instruction, voice instruction, key press, head movement instruction, etc.

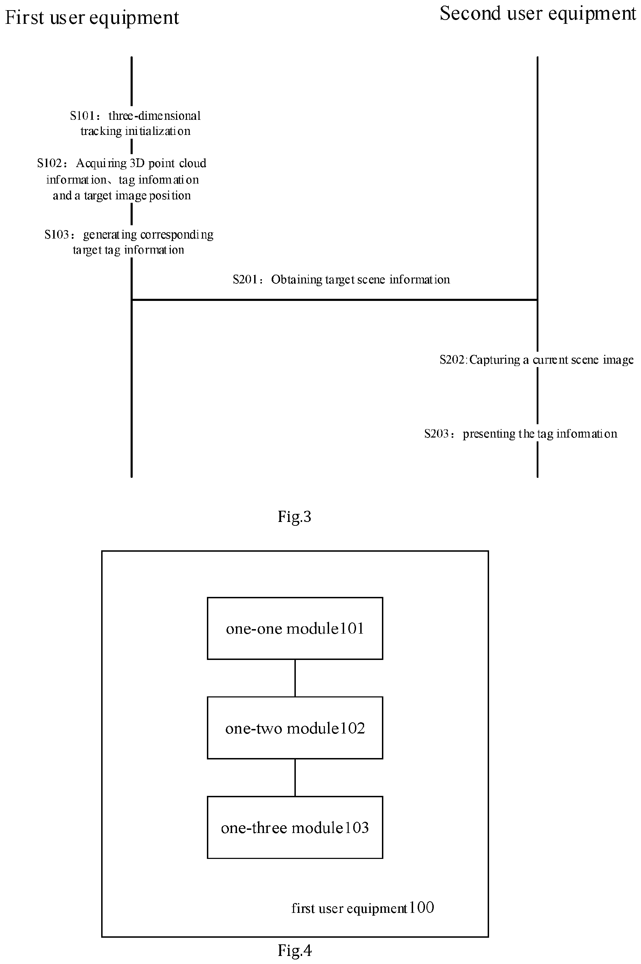

Fig. 3 illustrates a method of determining and presenting target tag information according to an aspect of the present application, wherein the method comprises:
the first user equipment shoots an initial scene image of a current scene by a camera device, and performs three-dimensional tracking initialization on the current scene according to the initial scene image;
the first user equipment shoots a real-time scene image of the current scene by the camera device, acquires real-time pose information of the camera device and 3D point cloud information corresponding to the current scene through three-dimensional tracking, and acquires tag information input by a user in the real-time scene image of the current scene and a target image position corresponding to the tag information;
the first user equipment determines a target spatial position according to the real-time pose information and the target image position, and generates corresponding target tag information according to the target spatial position and the tag information, wherein the target tag information is used for overlaying and presenting the tag information at the target spatial position of the 3D point cloud information;
the second user equipment obtains target scene information that matches the current scene, wherein the target scene information comprises a corresponding target tag information, which comprises corresponding tag information and a target spatial position;
the second user equipment shoots a current scene image about the current scene by a camera device;
the second user equipment determines a corresponding target image position according to the current pose information of the camera device and the target spatial position, and overlays and presents the tag information at the target image position of the current scene image.

Here, the process of determining and presenting the target tag information is the same as or similar to the process of determining the target tag information in fig. 1 and the process of presenting the target tag information in fig. 2, and will not be described again.

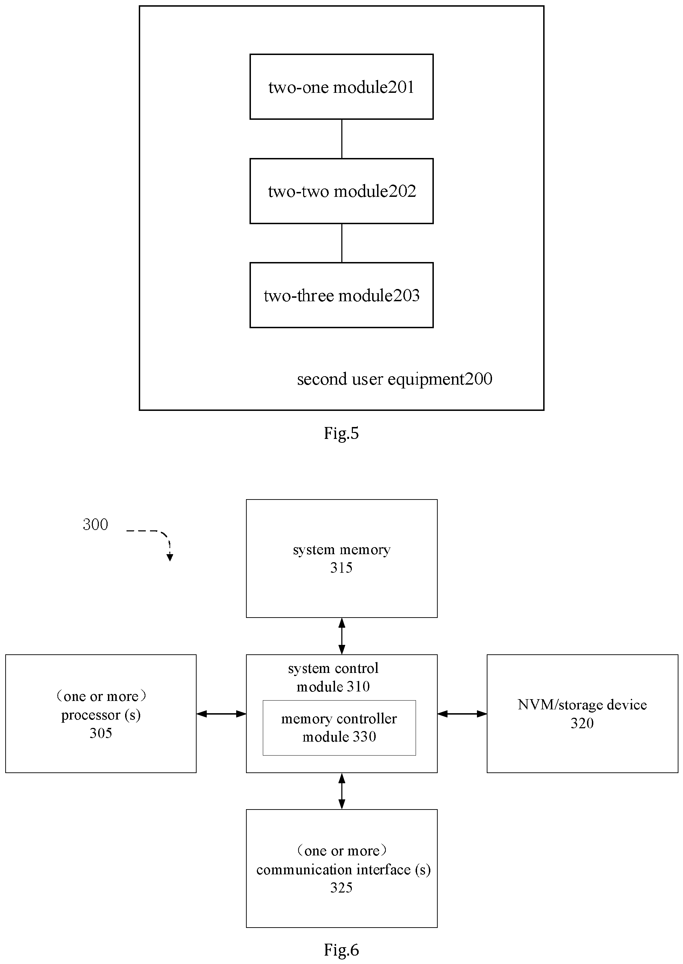

Each embodiment of the method for determining and presenting the target tag information of the present application is mainly described above. In addition, the present application also provides a specific device capable of implementing each embodiment, which is described below with reference to figs. 4 and 5.

Fig. 4 illustrates the first user equipment 100 for determining target tag information according to an aspect of the present application, wherein the first user equipment includes a one-one module 101, a one-two module 102, and a one-three module 103. The one-one module 101, for shooting an initial scene image of a current scene by a camera device, and performing three-dimensional tracking initialization on the current scene according to the initial scene image. The one-two module 102, for shooting a real-time scene image of the current scene by the camera device, acquiring real-time pose information of the camera device and 3D point cloud information corresponding to the current scene through 3D tracking, and acquiring tag information input by a user in the real-time scene image of the current scene and a target image position corresponding to the tag information. And the one-three module 103, for determining a target spatial position according to the real-time pose information and the target image position, and generating corresponding target tag information according to the target spatial position and the tag information, wherein the target tag information is used for overlaying and presenting the tag information at the target spatial position of the 3D point cloud information.

In some embodiments, the tag information includes, but is not limited to: identification information, file information, form information, application invoking information, and real-time sensing information. In some embodiments, the application invoking information is used to invoke the first target application installed in the current device. In some embodiments, the application invoking information is used to invoke the second target application installed in a corresponding third user equipment, and there is a communication connection between the third user equipment and the first user equipment. In some embodiments, the tag information includes real-time sensing information for indicating real-time sensing data of a corresponding sensing device, and there is a communication connection between the sensing device and the first user equipment.

Here, the specific embodiments corresponding to the one-one module 101, the one-two module 102, and the one-three module 103 shown in Fig. 4 are the same as or similar to the embodiments of the step S101, the step S102, and the step S103 shown in Fig. 1, and thus are not repeated here.

In some embodiments, the first user equipment further comprises a one-four module (not shown) for receiving the real-time sensing information which is returned by the network device and obtained by the sensing device. The generating the corresponding target tag information according to the target spatial position and the tag information comprises: generating corresponding target tag information according to the target spatial position and the real-time sensing information, wherein the target tag information is used for overlapping and presenting the real-time sensing information at the target spatial position of the 3D point cloud information. In some embodiments, the determining a target spatial position according to the real-time pose information and the target image position comprises: mapping the target image position to a space according to the real-time pose information to determine a corresponding 3D straight line; and determining a target spatial position corresponding to the target point position according to the 3D point cloud information and the 3D straight line. In some embodiments, the 3D point cloud information comprises a plurality of feature points, each feature point comprises corresponding depth information. The determining a target spatial position corresponding to the target point position according to the 3D point cloud information and the 3D straight line comprises determining at least one target feature point from the 3D point cloud information according to the distance between each feature point in the 3D point cloud information and the 3D straight line; determining depth information of a target point position on the 3D straight line based on the depth information of the at least one target feature point, thereby determining a corresponding target spatial position. In some embodiments, the at least one target feature point comprises a feature point with the smallest distance from the 3D straight line. Also in some embodiments, the distance of each of the at least one target feature point from the 3D straight line is less than or equal to a distance threshold. The determining depth information of a target point position on the 3D straight line based on the depth information of the at least one target feature point comprises determining the weight information of each target feature point according to the distance information between the at least one target feature point and the 3D straight line; determining the depth information of the target point position on the 3D straight line based on the depth information and the weight information of each target feature point.

In some embodiments, the first user equipment further comprises a one-five module (not shown), for updating target scene information based on the target tag information, wherein the target scene information is stored in a scene database, the scene database includes one or more target scene information, and each target scene information includes the target tag information and corresponding 3D point cloud information. In some embodiments, the each target scene information further comprises corresponding device parameter information.

In some embodiments, the first user equipment further includes a one-six module (not shown) , for sending the target scene information to a corresponding network device, wherein the target scene information is sent to the second user equipment through the network device base on a scene invoking request of the second user equipment, and the target scene information is used for overlapping the tag information in a current scene image acquired by the second user equipment. In some embodiments, the first user equipment further includes a one-seven module (not shown), for receiving a scene invoking request about the target scene information sent by the corresponding second user equipment; responding to the scene invoking request, and sending the target scene information to the second user equipment, wherein the target scene information is used for overlaying the tag information at a current scene image captured by the second user equipment. In some embodiments, the first user equipment further includes a one-eight module (not shown), for continuously shooting a subsequent scene image about the current scene through a camera device of the first user equipment, and overlaying and presenting the tag information on the subsequent scene image corresponding to the current scene based on the target scene information.

Here, the specific embodiments corresponding to the one-four module to the one-eight module are the same as or similar to the embodiments of the above steps S104 to S108, and thus are not repeated here.

Fig. 5 illustrates the second user equipment 200 for presenting target tag information according to another aspect of the present application, wherein the equipment includes a two-one module 201, a two-two module 202, and a two-three module 203. The two-one module 201, for obtaining target scene information that matches a current scene, wherein the target scene information comprises a corresponding target tag information, which comprises corresponding tag information and a target spatial position. The two-two module 202, for shooting a current scene image about the current scene by a camera device; The two-three module 203, for determining a corresponding target image position according to the current pose information of the camera device and the target spatial position, and overlaying and presenting the tag information at the target image position of the current scene image.

Here, the specific embodiments corresponding to the two-one module 201, the two-two module 202, and the two-three module 203 shown in Fig. 5 are the same as or similar to the embodiments of the step S201, the step S202, and the step S203 shown in Fig. 2, and therefore, the detailed descriptions thereof are omitted here.

In some embodiments, the second user equipment further comprises a two-four module (not shown), for acquiring an editing operation of the corresponding user on the target scene information, and updating the target scene information based on the editing operation. In some embodiments, the second user equipment further comprises a two-five module (not shown), for sending the updated target scene information to the network device to update the corresponding scene database. In some embodiments, the tag information includes real-time sensing information, and the real-time sensing information is used for indicating real-time sensing data of a corresponding sensing device, and there is a communication connection between the sensing device and the second user equipment; wherein, the equipment further comprises a two-seven module (not shown), which is used to acquire the real-time sensing data corresponding to the sensing device. The overlaying and presenting the tag information at the target image position of the current scene image comprises overlaying and presenting the real-time sensing data at the target image position of the current scene image. In some embodiments, the tag information includes application invoking information used for invoking a target application in the current device. The second user equipment further includes a two-six module (not shown), for acquiring a trigger operation of the correspond user about the application invoking information in the current scene image, and invoking a target application in the second user equipment based on the trigger operation.

Here, the specific embodiments corresponding to the two-four module to the two-seven module are the same as or similar to the embodiments of the above step S204 to step S207, and thus are not repeated here, and are incorporated herein by reference.

In addition to the method and apparatus described in the above embodiments, the present application provides a computer-readable storage medium storing computer code that, when executed, performs the method as described in any of the previous claims.

The present application also provides a computer program product for performing the method as described in the preceding paragraph when executed by a computer equipment.

The present application also provides a computer device, the computer device comprising:
one or more processors;
a memory for storing one or more computer programs;
the one or more computer programs, when executed by the one or more processors, cause the one or more processors to perform a method as described in the preceding paragraph.

Fig. 6 illustrates an exemplary system that can be used to implement various embodiments described herein.

As shown in fig. 6, in some embodiments, the system 300 can be implemented as any of the devices described above in the various described embodiments. In some embodiments, system 300 can include one or more computer-readable media(e.g., system memory or NVM/storage 320) having instructions and one or more processors (e.g., processor (s) 305).

For one embodiment, system control module 310 may include any suitable interface controller to provide any suitable interface to at least one of processor (s) 305 and/or any suitable device or component in communication with system control module 310.

System control module 310 may include a memory controller module 330 to provide an interface to system memory 315. The memory controller module 330 may be a hardware module, a software module, and/or a firmware module.

System memory 315 may be used, for example, to load and store data and/or instructions for system 300. For one embodiment, system memory 315 may include any suitable volatile memory, such as suitable DRAM. In some embodiments, system memory 315 may include double data rate type four synchronous dynamic random access memory (DDR4 SDRAM).

For one embodiment, system control module 310 may include one or more input/output (I/O) controllers to provide an interface to NVM/storage device 320 and communication interface (s) 325.

For example, NVM/storage device 320 may be used to store data and/or instructions. NVM/storage 320 can include any suitable non-volatile memory (e.g., flash memory) and/or can include any suitable non-volatile storage device (s) (e.g., one or more hard disk drive(s) (HDD(s)), one or more compact disc (CD) drive(s), and/or one or more digital versatile disc (DVD) drive(s)).

NVM/storage device 320 may comprise a storage resource that is physically part of the device on which system 300 is installed, or that is accessible by the device without being part of the device. For example, NVM/storage device 320 may be accessed over a network via communication interface (s) 325.

Communication interface(s) 325 may provide an interface for system 300 to communicate over one or more networks and/or with any other suitable device. System 300 can communicate wirelessly with one or more components of a wireless network in accordance with any of one or more wireless networking standards and/or protocols.

For one embodiment, at least one of the processor (s) 305 may be packaged with logic of one or more controllers (e.g., memory controller module 330) of system control module 310. For one embodiment, at least one of the processor (s) 305 may be packaged together with logic of one or more controllers of the system control module 310 to form a system-in-package (SiP). For one embodiment, at least one of the processor (s) 305 may be integrated with the logic of one or more controller(s) of the system control module 310 on the same mold. For one embodiment, at least one of the processor (s) 305 may be integrated on the same die with logic for one or more controller(s) of the system control module 310 to form a system on a chip (SoC).

In various embodiments, system 300 may be, but is not limited to being: a server, a workstation, a desktop computing device, or a mobile computing device (e.g., a laptop computing device, a handheld computing device, a tablet computer, a netbook, etc.). In various embodiments, the system 300 may have more or fewer components and/or a different architecture. For example, in some embodiments, system 300 includes one or more cameras, keyboards, liquid crystal display (LCD) screens (including touch screen displays), non-volatile memory ports, multiple antennas, graphics chips, application specific integrated circuits (ASICs), and speakers.

It is noted that the present application may be implemented in software and/or a combination of software and hardware, for example, using an application specific integrated circuit (ASIC), a general purpose computer, or any other similar hardware device. In one embodiment, the software program of the present application may be executed by a processor to perform the steps or functions described above. Likewise, the software routines(including associated data structures) of the present application may be stored on a computer readable recording medium such as RAM memory, magnetic or optical drive or diskette and the like. In addition, some of the steps or functions of the present disclosure may be implemented using hardware, for example, as circuitry that cooperates with a processor to perform the steps or functions.

In addition, a portion of the present application can be applied as a computer program product, such as computer program instructions, which, when executed by a computer, can invoke or provide methods and/or technical solutions according to the present application through the operation of the computer. It should be understood by those skilled in the art that the form of the computer program instructions in the computer readable medium includes but not limited to source files, executable files, installation package files, etc. Accordingly, the manner in which the computer program instructions are executed by the computer includes but not limited to: the computer directly executes the instructions, or the computer compiles the instructions and executes the corresponding compiled program, or the computer reads and executes the instruction, or the computer reads and installs the instruction and then executes the corresponding installed program. In this context, computer-readable media may be any available computer-readable storage media or communication media that can be accessed by a computer.

Communication media includes media in which communication signals, such as computer readable instructions, data structures, program modules, or other data are transferred from one system to another. Communication media can include conductive transmission media such as cables and wires (e.g., fiber optics, coaxial, etc.) and wireless (non-conductive transmission) media capable of propagating energy waves, such as acoustic, electromagnetic, RF, microwave, and infrared. Computer readable instructions, data structures, program modules or other data may be embodied, for example, in a modulated data signal in a wireless medium such as a carrier wave or similar mechanism embodied as part of spread spectrum technology. The term "modulated data signal" means a signal that has one or more of its characteristics changed or set in such a manner as to encode information in the signal. The modulation may be analog, digital, or mixed modulation techniques.

By way of example, and not limitation, computer-readable storage media may include volatile and non-volatile, removable and non-removable media implemented in any method or technology for storage of information such as computer-readable instructions, data structures, program modules, or other data. For example, computer-readable storage media include, but are not limited to, volatile memory such as random access memory (RAM, DRAM, SRAM), and non-volatile memory such as flash memory, various read-only memories (ROM, PROM, EPROM, EEPROM), magnetic and ferromagnetic/ferroelectric memories (MRAM, FeRAM); and magnetic and optical storage devices (hard disks, magnetic tape, CDs, DVDs), or other now known or later developed media capable of storing computer readable information/data for use with a computer system.

Here, an embodiment according to the present application includes an apparatus, the apparatus including a memory for storing computer program instructions and a processor for executing the program instructions, wherein, when the computer program instructions are executed by the processor, the apparatus is triggered to operate the method and/or technical solution based on the foregoing embodiments according to the present application.

It will be apparent to those skilled in the art that the present application is not limited to the details of the above-described exemplary embodiments, and that the present application can be embodied in other specific forms without departing from the spirit or essential characteristics thereof. The embodiments are therefore to be considered in all respects as illustrative and not restrictive, the scope of the application being defined by the appended claims rather than by the foregoing description, and all changes which come within the meaning and range of equivalency of the claims are therefore intended to be embraced therein. Any reference signs in the claims shall not be construed as limiting the claim to which they relate. Furthermore, it is clear that the word "comprising" does not exclude other elements or steps and that the singular does not exclude the plural. The units or means recited in the device claims may also be implemented by one unit or means by software or hardware. The terms first, second, etc., are used to denote names and do not denote any particular order.

## Claims

1. A method for determining target tag information, applied to the first user equipment, the method comprises:
shooting an initial scene image of a current scene by a camera device, and performing three-dimensional tracking initialization on the current scene according to the initial scene image;
shooting a real-time scene image of the current scene by the camera device, acquiring real-time pose information of the camera device and 3D point cloud information corresponding to the current scene through three-dimensional tracking, and acquiring tag information input by a user in the real-time scene image of the current scene and a target image position corresponding to the tag information;
determining a target spatial position according to the real-time pose information and the target image position, and generating corresponding target tag information according to the target spatial position and the tag information, wherein the target tag information is used for overlaying and presenting the tag information at the target spatial position of the 3D point cloud information.

2. The method according to claim 1, wherein the tag information comprises at least one of the following:
identification information;
file information;
form information;
application invoking information;
real-time sensing information.

3. The method according to claim 2, wherein the application invoking information is used to invoke the first target application installed in the current device.

4. The method according to claim 2, wherein the application invoking information is used to invoke the second target application installed in the corresponding third user equipment, and there is a communication connection between the third user equipment and the first user equipment.

5. The method according to claim 2, wherein the tag information comprises real-time sensing information, and the real-time sensing information is used to indicate real-time sensing data of a corresponding sensing device, and there is a communication connection between the sensing device and the first user equipment.

6. The method according to claim 5, further comprises:
sending a data fetch request about the sensing device to a corresponding network device;
receiving real-time sensing information which is returned by the network device and obtained by the sensing device;
wherein the generating corresponding target tag information according to the target spatial position and the tag information, comprises:
generating corresponding target tag information according to the target spatial position and the real-time sensing information, wherein the target tag information is used for overlaying and presenting the real-time sensing information at the target spatial position of the 3D point cloud information.

7. The method according to claim 1, wherein the determining a target spatial position according to the real-time pose information and the target image position, comprises:
mapping the target image position to a space according to the real-time pose information to determine a corresponding 3D straight line;
determining a target spatial position corresponding to the target point position according to the 3D point cloud information and the 3D straight line.

8. The method according to claim 7, wherein the 3D point cloud information comprises a plurality of feature points, each feature point comprises corresponding depth information; the determining a target spatial position corresponding to the target point position according to the 3D point cloud information and the 3D straight line, comprises:
determining at least one target feature point from the 3D point cloud information according to the distance between each feature point in the 3D point cloud information and the 3D straight line;
determining depth information of a target point position on the 3D straight line based on the depth information of the at least one target feature point, thereby determining a corresponding target spatial position.

9. The method according to claim 8, wherein the at least one target feature point comprises a feature point with the smallest distance from the 3D straight line.

10. The method according to claim 8, wherein the distance between each target feature point in the at least one target feature point and the 3D straight line is less than or equal to a distance threshold; wherein the determining depth information of a target point position on the 3D straight line based on the depth information of the at least one target feature point, comprises:
determining the weight information of each target feature point according to the distance information between the at least one target feature point and the 3D straight line;
determining the depth information of the target point position on the 3D straight line based on the depth information and the weight information of each target feature point.

11. The method according to claim 1, further comprises:
updating target scene information based on the target tag information, wherein the target scene information is stored in a scene database, the scene database includes one or more target scene information, and each target scene information includes the target tag information and corresponding 3D point cloud information.

12. The method according to claim 11, wherein the each target scene information further comprises corresponding device parameter information.

13. The method according to claim 11 or 12, further comprises:
sending the target scene information to a corresponding network device, wherein the target scene information is sent to the second user equipment through the network device base on a scene invoking request of the second user equipment, and the target scene information is used for overlapping the tag information in a current scene image acquired by the second user equipment.

14. The method according to claim 11 or 12, further comprises:
receiving a scene invoking request about the target scene information sent by the corresponding second user equipment;
responding to the scene invoking request, and sending the target scene information to the second user equipment, wherein the target scene information is used for overlaying the tag information in a current scene image captured by the second user equipment.

15. The method according to claim 11 or 12, further comprises:
continuously shooting a subsequent scene image about the current scene through the camera device of the first user equipment, and overlaying and presenting the tag information on the subsequent scene image corresponding to the current scene based on the target scene information.

16. A method for presenting target tag information, applied to the second user equipment, wherein the method comprises:
obtaining target scene information that matches a current scene, wherein the target scene information comprises a corresponding target tag information, which comprises corresponding tag information and a target spatial position;
shooting a current scene image about the current scene by a camera device;
determining a corresponding target image position according to the current pose information of the camera device and the target spatial position, and overlaying and presenting the tag information at the target image position of the current scene image.

17. The method according to claim 16, further comprises:
acquiring an editing operation of the corresponding user on the target scene information, and updating the target scene information based on the editing operation.

18. The method according to claim 17, further comprises:
sending the updated target scene information to the network device to update the corresponding scene database.

19. The method according to claim 16, wherein the tag information comprises application invoking information, and the application invoking information is used for invoking a target application in the current device; wherein the method further comprises:
acquiring a trigger operation of the correspond user about the application invoking information in the current scene image, and invoking the target application in the second user equipment based on the trigger operation.

20. The method according to claim 16, wherein the tag information comprises real-time sensing information, and the real-time sensing information is used to indicate real-time sensing data of a corresponding sensing device and there is a communication connection between the sensing device and the second user equipment; wherein the method further comprises:
acquiring real-time sensing data corresponding to the sensing device;
wherein the overlaying and presenting the tag information at the target image position of the current scene image, comprises:
overlaying and presenting the real-time sensing data at the target image position of the current scene image.

21. A method of determining and presenting target tag information, wherein the method comprises:
the first user equipment shoots an initial scene image of a current scene by a camera device, and performs three-dimensional tracking initialization on the current scene according to the initial scene image;
the first user equipment shoots a real-time scene image of the current scene by the camera device, acquires real-time pose information of the camera device and 3D point cloud information corresponding to the current scene through three-dimensional tracking, and acquires tag information input by a user in the real-time scene image of the current scene and a target image position corresponding to the tag information;
the first user equipment determines a target spatial position according to the real-time pose information and the target image position, and generates corresponding target tag information according to the target spatial position and the tag information, wherein the target tag information is used for overlaying and presenting the tag information at the target spatial position of the 3D point cloud information;
the second user equipment obtains target scene information that matches the current scene, wherein the target scene information comprises a corresponding target tag information, which comprises corresponding tag information and a target spatial position;
the second user equipment shoots a current scene image about the current scene by a camera device;
the second user equipment determines a corresponding target image position according to the current pose information of the camera device and the target spatial position, and overlays and presents the tag information at the target image position of the current scene image.

22. The first user equipment to determine target tag information, wherein the equipment comprises:
one-one module, for shooting an initial scene image of a current scene by a camera device, and performing three-dimensional tracking initialization on the current scene according to the initial scene image;
one-two module, for shooting a real-time scene image of the current scene by the camera device, acquiring real-time pose information of the camera device and 3D point cloud information corresponding to the current scene through three-dimensional tracking, and acquiring tag information input by a user in the real-time scene image of the current scene and a target image position corresponding to the tag information;
one-three module, for determining a target spatial position according to the real-time pose information and the target image position, and generating corresponding target tag information according to the target spatial position and the tag information, wherein the target tag information is used for overlaying and presenting the tag information at the target spatial position of the 3D point cloud information.

23. The second user equipment to present target tag information, wherein the equipment comprises:
two-one module, for obtaining target scene information that matches a current scene, wherein the target scene information comprises a corresponding target tagl information, which comprises corresponding tag information and a target spatial position;
two-two module, for shooting a current scene image about the current scene by a camera device;
two-three module, for determining a corresponding target image position according to the current pose information of the camera device and the target spatial position, and overlaying and presenting the tag information at the target image position of the current scene image.

24. A computer equipment, comprises:
one or more processors; and
a storage apparatus for storing computer executable instructions, which carry out the steps of the method as claimed in any one of claims 1 to 20 when the executable instruction is being executed.

25. A computer-readable storage medium , storesone or more compute programs/instructions, which perform any one steps of the method of claims 1 to 20 when executed.

26. A compute program product, comprises compute programs/instructions which implement any one steps of the method of claims 1 to 20 when executed by a processor.
